# EUROPEAN PATENT SPECIFICATION

(11) **EP 4 446 144 B1**
(45) Date of publication and mention of the grant of the patent: **21.01.2026**
(21) Application number: 23210486.9
(22) Date of filing: 17.11.2023
(51) Int. Cl.: B60J 5/10, B62D 65/06

(54) **AN EXTERIOR PART ASSEMBLY OF AUTOMOBILE**
AUSSENTEILEANORDNUNG EINES KRAFTFAHRZEUGS
ENSEMBLE DE PARTIE EXTÉRIEURE D'AUTOMOBILE

(30) Priority: 14.04.2023 CN 202320827431 U
(43) Date of publication of application: 16.10.2024
(73) Proprietor: Yanfeng Plastic Omnium Automotive Exterior Systems Co., Ltd., Shanghai 201805 (CN); Yanfeng Plastic Omnium (Shenyang) Automotive Exterior Systems Co., Ltd., Shenyang, Liaoning 110143 (CN); OPmobility SE, 69007 Lyon (FR)
(72) Inventor: DAI, Ronghua, SHANGHAI, 201805 (CN); TAN, Lijun, SHANGHAI, 201805 (CN); JI, Qingtao, SHANGHAI, 201805 (CN); ZHU, Xiaojun, SHANGHAI, 201805 (CN)
(74) Representative: LLR

(56) References cited:
- EP-A1- 3 187 349
- WO-A1-2021/153200
- DE-A1- 102015 220 311

## Description

The present invention belongs to the technical field of automobile exterior parts and relates to a connection structure between an outer skin and an inner panel of an exterior part, such as a tailgate (for example, near a rear lateral light) or a rear spoiler. The rear spoiler can be a roof spoiler or a tailgate spoiler.

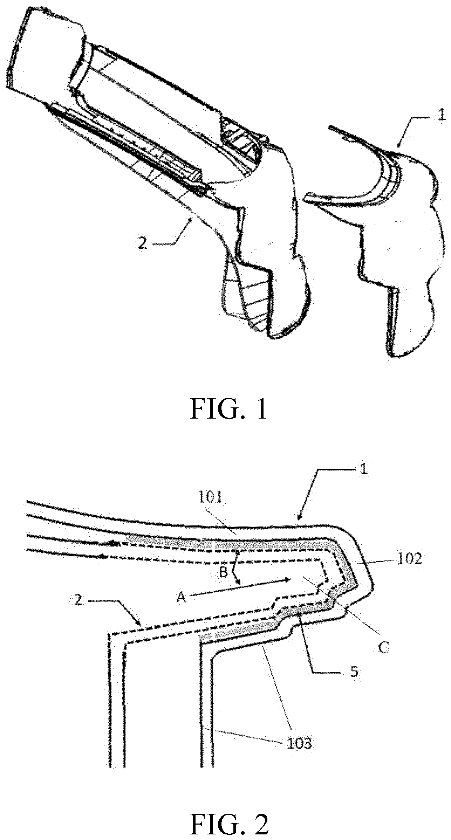

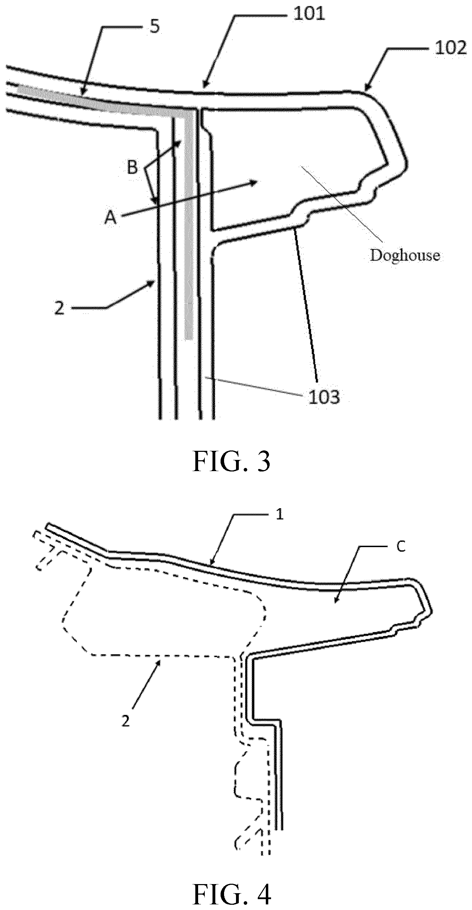

As the automobile industry develops, improvements and developments are continuously made in the automobile industry in terms of new functions, styles, and design concepts. More and more attention is placed on style customized design. More and more attention is also placed on automobile assembly and transportation. An automobile exterior part assembly, for example a tailgate assembly, is composed of two parts, an inner panel 2 and an outer skin 1, as shown in FIG. 1. During manufacturing, the following problems generally exist:
1) As shown in FIG. 2, a plastic, preferably thermoplastic, material tailgate is generally formed by connecting an inner panel (composite) and an outer skin (thermoplastic) together by adhesion. During bonding, the adhesive is usually applied with a robot: the robot nozzle is not able to reach the adhesive path inside such a deep and sharp location in the hollow cavity C. Furthermore, in order not to shovel the adhesive, the adhesion angle is generally required to be greater than 40 degrees. The expression "shovel adhesive" here means not destroying the bonding layer while inserting the inner panel into the outer skin. As a result, as shown in FIG. 3, a local hollow cavity usually called "doghouse" generally needs to be designed on the lateral side extremities of the outer skin to increase the adhesion angle. Here, the term "doghouse" refers to a hollow tunnel, whose openings are along the Y axis of vehicle and constituting a lateral entry on both extreme extremities right/left of the tailgate. However, once such a "doghouse" is designed on the outer skin, the outer skin will have visible sink marks on the external face which are not acceptable for quality reasons.
2) As shown in FIG. 4, an outward protruding structure such as a convex tail wing on an automobile tailgate is designed in order to provide aerodynamic function or to integrate a technical element such as a wiping/washing system for the window or a third rear stop light , and a hollow cavity C is formed inside the convex structure. However, due to the provision of this hollow cavity, the static stiffness of the outer skin is difficult to meet requirements.

Document EP 3 187 349 A1 discloses a connection structure between an outer skin and an inner panel of a vehicle tailgate.

An objective of the present invention is to provide a connection structure between an outer skin and an inner panel of an automobile exterior part, so as to solve the problems of sink marks and static stiffness in the prior art.

The objective of the present invention can be achieved by the following technical solutions:
An exterior part assembly of automobile, including an outer skin and an inner panel which are bonded together by adhesion, wherein the outer skin comprises an upper member, a lower member and a rounded corner connecting in between the upper member and the lower member, the rounded corner being convex shaped and protruding outward such that a hollow cavity is formed inside the rounded corner, wherein it further comprises a first box-like structure and wherein the first box-like structure is integrally formed with the outer skin as one piece and includes an inclined top plate extending obliquely through the hollow cavity in the longitudinal direction from an end of the lower member to a centre portion of the rounded corner such that an embedding groove is formed between the inclined top plate and the upper member, characterized in that it further comprises a second box-like structure and
wherein the second box-like structure is shaped to engage with the embedding groove such that the second box-like structure can be inserted into the embedding groove to fill in the volume of the hollow cavity and close the hollow cavity with its outer wall, and that the second box-like structure cooperates with and abuts against the inclined top plate with its lower wall and cooperates with and abuts against the upper member with its upper wall.

It's known in the art that the term "adhesion angle" refers to the angle formed by the incident trajectory of a moving part to be bonded during an adhesion operation and the target adhesion surface, and the "minimum adhesion angle" is defined as the angle necessary to not cause shoveling adhesive during the adhesion operation. In other words, when adhesion is carried out at an angle greater than the minimum adhesion angle, it will not be easy to shovel the adhesive. In most embodiments, the limit for the minimum adhesion angle is linked to the following aspects: 1- the accessibility to apply the glue trajectory on the right place by a robot (quite impossible in a groove whose inner space is too deep and/or too narrow); and 2- even if we are able to apply the glue inside the inner space of the groove, the adhesion angle formed by the incident trajectory of the part to be bonded and the adhesion surface is more tangential (in other words acute or sharp), higher probability to cause the "shoveling adhesive" effect. In fact, a perpendicular direction of the incident trajectory of the part to be bonded relative to the target adhesion surface is the best angle to avoid the "shoveling adhesive" effect. Thus, during the adhesion operation to press and bond a part in a groove (or an inner volume of a hollow cavity): the greater is the included angle of the groove (volume), the greater adhesion angle (even closer to the perpendicular direction of the incident trajectory of the part to be inserted and bonded) can be obtained.

In a preferred embodiment, the included angle of the embedding groove formed by the inclined top plate and the upper member of the outer skin is greater than the included angle of the hollow cavity (that is the included angle formed by the upper member and the lower member of the outer skin). As a result, the adhesion angle in the embedding groove (which is around half of the included angle of the embedding groove) is increased, by setting the inclined top plate of the first box-like structure with a more inclined angle relative to the upper member, compared with the lower member. Here the expression "more inclined angle" means a greater angle between the inclined top plate of the first box-like structure and the upper member.

Further, the included angle of the target adhesion space (to bond the inner panel) delimited by the outer wall of the second box-like structure and the upper member of the outer skin is even greater than the included angle of the embedding groove formed by the inclined top plate and the upper member of the outer skin. In other words, the second box-like structure can further increase the adhesion angle.

In the context of the invention, 20° is a general standard for the minimum adhesion angle in the field. Hence, in some embodiments, the included angle between the inclined top plate and the upper member is greater than 40°, and/or the included angle of the target adhesion space delimited by the outer wall of the second box-like structure located at the opening of the embedding groove and the upper member of the outer skin is greater than 40°. In other embodiments, the minimum adhesion angle can also be determined according to its own manufacturing process.

Advantageously, the second box-like structure is a wedge-shaped box-like structure.

Advantageously, the first and second box-like structures are respectively arranged at both ends of the outer skin in the transversal direction (width direction) of the vehicle.

In a preferred embodiment, the second box-like structure is formed with the outer skin by injection molding at the same time in the same injection tool. The second box-like structure can be integrated at a non-visible area of the outer skin, which avoids adding a set of box-like structure molds and saves costs of molds.

Further, the inner panel is a PP glass fibre inner panel or a SMC composite inner panel.

Further, the PP glass fibre inner panel is one of PP GF30 inner panel and PP GF40 inner panel.

Further, the outer skin is a thermoplastic (such as PP or ABS) glass fibre outer skin.

Further, the thermoplastic glass fibre outer skin is PP T30 outer skin or PP T20 outer skin.

In a preferred embodiment, the inner panel is bonded to the outer wall of the second box-like structure by adhesion.

In a preferred embodiment, the exterior part assembly of automobile further comprises a bonding layer arranged between the second box-like structure and the upper member and the first box-like structure.

In a preferred embodiment, the exterior part assembly is a tailgate or a spoiler.

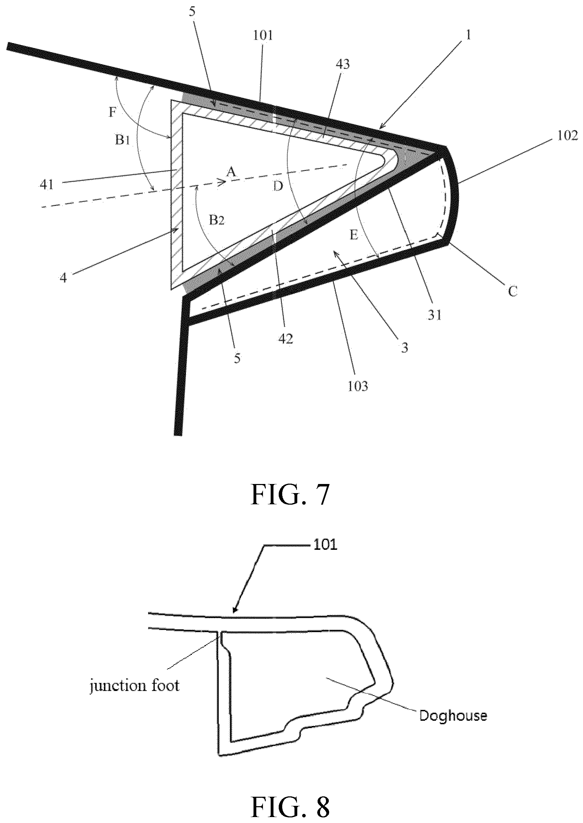

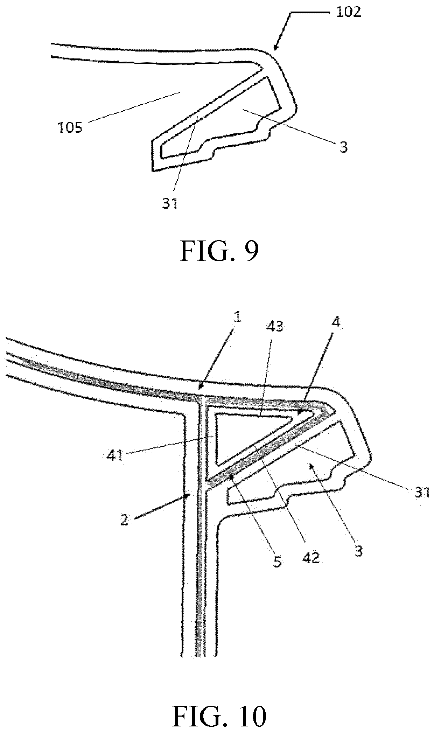

Compared with the prior art, the present invention has the following advantageous features:
1) In the present invention, the outer skin and the inner panel are bonded together by means of the engagement of the second box-like structure and the first box-like structure (or the embedding groove). On the one hand, the running through inclined top plate of the first box-like structure and the stacking and engaging second box-like structure can strengthen the hollow corner structure of the outer skin. On the other hand, by setting the inclination angle of the inclined top plate, the included angle of the embedding groove between the inclined top plate of the first box-like structure and the upper member of the outer skin can be adjusted to be greater than 40°(thus the adhesion angle could be greater than 20°).Thus, the problem of shoveling adhesive during the pressing and bonding operation can be avoided.
2) By comparing FIG. 8 with FIG. 9, it can be seen that, the connection point between the inclined top plate and the outer skin has been adjusted to the location of the rounded corner of the outer skin, taking advantage of the fact that sink marks cannot be easily formed at the rounded corner (thanks to its high thickness), the present invention solves the problem of sink marks on the outer skin.
3) The present invention integrates the second box-like structure together with the outer skin by one injection moulding so as to save mold costs. Then, the integrally formed second box-like structure and the outer skin are cut and separated, painted and colored separately, and then recombined and assembled together to meet the production requirements of the difference in color design between the second box-like structure (as a structural part) and the outer skin.
4) The invention adopts the settings of the first and second box-like structures arranged at both ends of the outer skin in the width direction, so as to reinforce the hollow and outward protruding rounded corner of the outer skin, thereby meeting the static stiffness requirements of the outer skin.
   FIG. 1 is a schematic exploded structural view of an automobile tailgate (prior art);
   FIG. 2 is a sectional view of a connecting structure between an inner panel and an outer skin of a tailgate with a small adhesion angle (prior art);
   FIG. 3 is a sectional view of a connecting structure between an inner panel and an outer skin of a tailgate with a big adhesion angle (prior art);
   FIG. 4 is a sectional view of a connecting structure between an inner panel and an outer skin of a tailgate with a hollow cavity (prior art);
   FIG. 5 is a schematic enlarged view of the second box-like structure according to a preferred embodiment of the invention;
   FIG. 6 is a schematic view of the assembly process of the second box-like structure and the first box-like structure according to a preferred embodiment of the invention;
   FIG. 7 is a schematic view of the assembly structure of the second box-like structure and the first box-like structure according to a preferred embodiment of the invention;
   FIG. 8 is a sectional view of a conventional connecting structure between a Doghouse and an outer skin (prior art);
   FIG. 9 is a sectional view of a connecting structure between a first box-like structure and an outer skin in a preferred embodiment;
   FIG. 10 is a schematic view of an assembled structure of an outer skin and an inner panel by means of the first and second box-like structures.

Description of references in the drawings:
1-outer skin; 101-upper member; 102- rounded corner; 103-lower member; 105-embedding groove; 2-inner panel; 3-first box-like structure; 31-top plate; 4-second box-like structure; 41-outer wall; 42-lower wall; 43-upper wall; 5-bonding layer; 6-bracket;
A-adhesion direction (the incident trajectory of the part to be bonded);
B-adhesion angle; C-hollow cavity;
B1-adhesion angle of the second box-like structure relative to the upper member;
B2- adhesion angle of the second box-like structure relative to the inclined top plate;
D-included angle of the embedding groove;
E-included angle of the hollow cavity;
F- included angle of the target adhesion space (to bond the inner panel) delimited by the outer wall of the second box-like structure and the upper member of the outer skin.

The present invention is described in detail below in connection with the accompanying drawings and specific embodiments. The following embodiments are realized based on the above-described technical solutions of the present invention and provide detailed modes of realization and specific operating processes. However, the scope of protection of the present invention is not limited to the embodiments described below.

### Embodiments:

The following embodiments are described with respect to an automobile tailgate exterior part assembly as a specific example. Those skilled in the art would understand that other exterior part, such as a spoiler or a bumper, will also be applicable in the scope of the invention.

The exterior part assembly of a tailgate includes an outer skin 1 and an inner panel 2 which are bonded together by adhesion by means of an first box-like structure 3 arranged at an inner side face of the outer skin 1, as well as a second box-like structure 4 and an bonding layer 5, as shown in FIGS. 7 and 10.

As shown in FIG. 7, the outer skin 1 comprises an upper member 101, a lower member 103, and a rounded corner 102 connecting in between the upper member 101 and the lower member 103. The rounded corner 102 is convex shaped and protruding outward such that a hollow cavity C is formed inside the rounded corner 102. The rounded corner 102 has a larger thickness than the other portions of the outer skin 1. Due to style constraints, the hollow cavity C is usually in a narrow and elongated shape, the included angle E of the hollow cavity C is always acute (sharp), for example less than 40°. This will lead to the adhesion angle inside the hollow cavity C (approximately half of the included angle E) to be less than 20°, which is a general standard for the minimum adhesion angle in the field, thus might causing shoveling adhesive during a bonding operation inside the hollow cavity C. To solve this problem, in this preferred embodiment, a combination of the first box-like structure 3 and the second box-like structure 4 is adapted.

As shown in FIGS. 7 and 9, the first box-like structure 3 is integrally formed with the outer skin 1 as one piece and includes an inclined top plate 31 extending obliquely through the hollow cavity C substantially in the longitudinal direction from an end of the lower member 103 to the rounded corner 102 (preferably a center portion of the rounded corner as shown in FIG. 9) such that an embedding groove 105 (shown in FIG. 9) is formed between the inclined top plate 31 and the upper member 101. The inclined top plate 31 has a greater inclination relative to the upper member 101 than the lower member 103, so that the thus formed embedding groove 105 has a greater included angle D than the included angle E of the hollow cavity C, to be more than 40°. Thus, the adhesion angle is enlarged inside the embedding groove compared with that in the hollow cavity C to reach the requirement for the minimum adhesion angle.

Further, the second box-like structure 4 is shaped to engage with the embedding groove 105 such that the second box-like structure 4 can be inserted into the embedding groove 105 to close the hollow cavity C with its outer wall 41, and that the second box-like structure 4 cooperates with and abuts against the inclined top plate 31 with its lower wall 42 and cooperates with and abuts against the upper member 101 with its upper wall 43. The adhesion direction or incident trajectory A of the second box-like structure 4 is better in the middle of the embedding groove to get even adhesion angles B1 and B2. Thus, the adhesion angles B1 and B2 of the second box-like structure 4 respectively relative to the upper member 101 and the inclined top plate 31 are both greater than 20° in this case. The bonding layer 5 is arranged between the second box-like structure 4 and the upper member 101, the rounded corner 102, the inclined top plate 31, wherein the adhesive used can be a tape or foam or paste. For example, a double-sided adhesive foam (supplied as a tape roll) is always placed on the second box-like structure 4, but not possible to be placed in the embedding groove. Another example is a kind of adhesive "paste", which can be spread inside the embedding grove 105 and pushed by the second box-like structure 4 to fill the remaining gaps. This adhesive "paste" could also be placed over the second box-like structure 4 before inserting and pushing it inside the embedding groove 105.

With this combination, first, by comparing FIG. 8 with FIG. 9, as the connecting point of the first box-like structure 3 with the outer skin 1 is adjusted to the location of the rounded corner 102, the problem of sink marks on the outer skin 1 is solved. In fact, in FIG.8, the junction foot between the doghouse and the upper member is rather thinner compared to the other portion of the doghouse, to avoid important sink mark. However, the sink mark will still exist but only even less visible than the same thickness. In FIG. 9 according to the preferred embodiment to the invention, the junction between the inclined top plate 31 and the outer skin 1 is replaced to the rounded corner 102 so as to prevent and hide naturally the sink mark, event better to combine reduced thickness at the junction foot. In fact, on one hand, the rounded corner 102 has a higher thickness than the other portions of the outer skin (such as upper member 101 and lower member 103) and does not easily produce the sink mark; on the other hand, at the place of the rounded corner there is usually a well-marked shape line of style, behind which the less visible sink mark can be naturally hidden.

Second, the second box-like structure 4 and the first box-like structure 3 cooperate with each other by stacking and abutting, which can also play a better role in structural reinforcement.

Furthermore, the included angle D of the embedding groove 105 formed by the inclined top plate 31 and the upper member 101 of the outer skin 1 is greater than the original included angle E of the hollow cavity C, and the included angle F formed by the outer wall 41 of the second box-like structure 4 and the upper member 101 of the outer skin 1 is even greater than the included angle D of the embedding groove 105. Both these two included angles D and F are greater than 40 degrees. Thus, the adhesion angles are adjusted and increased so as to avoid the problem of shoveling adhesive.

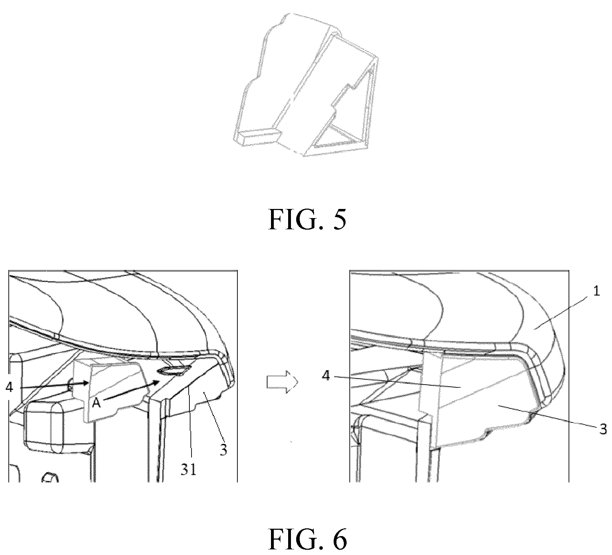

Advantageously as shown in FIG. 5, the second box-like structure 4 is a wedge-shaped angle adjusting box-like structure.

Besides, the second box-like structures 4 can be cut off after the injection molding of the outer skin is completed. As it is not a visible face, cutting requirements are not high. After completing painting of the outer skin, the second box-like structure 4 can be bonded back to the outer skin by an adhesive, in a form including but not limited to adhesive tape or glue or paste.

At this stage, as the second box-like structure 4 has not been painted and still remains black, appearance requirements can be met after adhesion. FIG. 6 shows a process of assembling the second box-like structure 4 and the first box-like structure 3.

In these embodiments, the inner panel 2 is a PP inner panel or a SMC composite inner panel; preferably, a PP GF30 inner panel or a PP GF40 inner panel is used. After the first and second box-like structures 3,4 are engaged and assembled to the outer skin 1, the inner panel 2 is bonded to the outer wall 41 of the second box-like structure 4 and the upper member 101 of the outer skin 1 by adhesion to complete the assembly, as shown in FIG. 10.

In these embodiments, the outer skin 1 is a PP glass fiber outer skin or an ABS outer skin; preferably, a PP T30 outer skin or a PP T20 outer skin is used.

Advantageously, the second box-like structure 4 and the first box-like structure 3 are generally arranged at both ends of the outer skin 1 in the transversal direction (width direction), so as to ensure a better overall connection between the outer skin 1 and the inner panel 2.

According to the invention, when the original adhesion angle of the outer skin (i.e. in this case the included angle E in the hollow cavity C) is less than the required minimum adhesion angle (for example 40 degrees), then the inclination of the top plate 31 of the first box-like structure 3 needs to be adjusted (more inclined relative to the upper member 101 compared to the lower member 103) to increase the adhesion angle of the bonding operation. The top plate 31 is arranged at the outer skin rounded corner 102 to prevent and hide sink marks, by taking advantage of the fact that the outer skin rounded corner 102 has a larger thickness and does not easily produce sink marks, the problem of sink marks on the outer skin is solved.

## Claims

1. An exterior part assembly of automobile, including an outer skin (1) and an inner panel (2) which are bonded together by adhesion, wherein the outer skin (1) comprises an upper member (101), a lower member (103) and a rounded corner (102) connecting in between the upper member (101) and the lower member (103), the rounded corner (102) being convex shaped and protruding outward such that a hollow cavity (C) is formed inside the rounded corner (102),
wherein it further comprises a first box-like structure (3) and wherein the first box-like structure (3) is integrally formed with the outer skin (1) as one piece and includes an inclined top plate (31) extending obliquely through the hollow cavity (C) in the longitudinal direction from an end of the lower member (103) to a portion of the rounded corner (102) such that an embedding groove (105) is formed between the inclined top plate (31) and the upper member (101), **characterized in that** it further comprises a second box-like structure (4) and
wherein the second box-like structure (4) is shaped to engage with the embedding groove (105) such that the second box-like structure (4) can be inserted into the embedding groove (105) to fill in the volume of the hollow cavity and close the hollow cavity (C) with its outer wall (41), and that the second box-like structure (4) cooperates with and abuts against the inclined top plate (31) with its lower wall (42) and cooperates with and abuts against the upper member (101) with its upper wall (43).

2. The exterior part assembly of automobile according to the preceding claim, wherein, the included angle (D) of the embedding groove (105) formed by the inclined top plate (31) and the upper member (101) of the outer skin (1) is greater than the included angle (E) of the hollow cavity (C).

3. The exterior part assembly of automobile according to any one of the preceding claims, wherein, the included angle (F) formed by the outer wall (41) of the second box-like structure (4) and the upper member (101) of the outer skin (1) is greater than the included angle (D) of the embedding groove (105) formed by the inclined top plate (31) and the upper member (101) of the outer skin (1).

4. The exterior part assembly of automobile according to any one of the preceding claims, wherein, the included angle (D) of the embedding groove (105) formed by the inclined top plate (31) and the upper member (101) of the outer skin (1) and/or the included angle (F) formed by the outer wall (41) of the second box-like structure (4) and the upper member (101) of the outer skin (1) are/is greater than 40 degrees.

5. The exterior part assembly of automobile according to any one of the preceding claims, wherein, the second box-like structure (4) is a wedge-shaped box-like structure.

6. The exterior part assembly of automobile according to any one of the preceding claims, wherein, the first and second box-like structures (3, 4) are respectively arranged at both ends of the outer skin (1) in the transversal direction.

7. The exterior part assembly of automobile according to any one of the preceding claims, wherein, the second box-like structure (4) is formed with the outer skin (1) by injection molding at the same time in the same injection tool.

8. The exterior part assembly of automobile according to any one of the preceding claims, wherein, the inner panel (2) is bonded to the outer wall (41) of the second box-like structure (4) by adhesion.

9. The exterior part assembly of automobile according to any one of the preceding claims, wherein, it further comprises a bonding layer (5) arranged between the second box-like structure (4) and the upper member (101) and the first box-like structure (3).

10. The exterior part assembly of automobile according to any one of the preceding claims, wherein, the exterior part assembly is a tailgate or a spoiler.

## Patentansprüche

1. Außenteileanordnung eines Kraftfahrzeugs, aufweisend eine Außenhaut (1) und ein inneres Paneel (2), die durch Kleben miteinander verbunden sind, wobei die Außenhaut (1) ein oberes Element (101), ein unteres Element (103) und eine gerundete Ecke (102), die das obere Element (101) und das untere Element (103) miteinander verbindet, umfasst, wobei die gerundete Ecke (102) konvex geformt ist und so nach außen vorsteht, dass ein Hohlraum (C) im Inneren der gerundeten Ecke (102) gebildet ist,
wobei sie des Weiteren eine erste kastenartige Struktur (3) umfasst, und
wobei die erste kastenartige Struktur (3) integral mit der Außenhaut (1) einstückig gebildet ist und eine geneigte obere Platte (31) aufweist, die sich schräg durch den Hohlraum (C) in der Längsrichtung von einem Ende des unteren Elements (103) zu einem Abschnitt der gerundeten Ecke (102) erstreckt, dergestalt, dass eine Einbettungsnut (105) zwischen der geneigten oberen Platte (31) und dem oberen Element (101) gebildet ist, **dadurch gekennzeichnet, dass** sie des Weiteren eine zweite kastenartige Struktur (4) umfasst, und wobei die zweite kastenartige Struktur (4) so geformt ist, dass sie in die Einbettungsnut (105) eingreift, dergestalt, dass die zweite kastenartige Struktur (4) in die Einbettungsnut (105) eingesetzt werden kann, um das Volumen des Hohlraums auszufüllen und den Hohlraum (C) mit ihrer Außenwand (41) zu verschließen, und dass die zweite kastenartige Struktur (4) mit ihrer unteren Wand (42) mit der geneigten oberen Platte (31) zusammenwirkt und an dieser anliegt und mit ihrer oberen Wand (43) mit dem oberen Element (101) zusammenwirkt und an diesem anliegt.

2. Außenteileanordnung eines Kraftfahrzeugs nach dem vorangehenden Anspruch, wobei der eingeschlossene Winkel (D) der Einbettungsnut (105), der von der geneigten oberen Platte (31) und dem oberen Element (101) der Außenhaut (1) gebildet ist, größer ist als der eingeschlossene Winkel (E) des Hohlraums (C).

3. Außenteileanordnung eines Kraftfahrzeugs nach einem der vorangehenden Ansprüche, wobei der eingeschlossene Winkel (F), der von der Außenwand (41) der zweiten kastenartigen Struktur (4) und dem oberen Element (101) der Außenhaut (1) gebildet ist, größer ist als der eingeschlossene Winkel (D) der Einbettungsnut (105), der von der geneigten oberen Platte (31) und dem oberen Element (101) der Außenhaut (1) gebildet ist.

4. Außenteileanordnung eines Kraftfahrzeugs nach einem der vorangehenden Ansprüche, wobei der eingeschlossene Winkel (D) der Einbettungsnut (105), der von der geneigten oberen Platte (31) und dem oberen Element (101) der Außenhaut (1) gebildet ist, und/oder der eingeschlossene Winkel (F), der von der Außenwand (41) der zweiten kastenartigen Struktur (4) und dem oberen Element (101) der Außenhaut (1) gebildet ist, größer als 40 Grad sind.

5. Außenteileanordnung eines Kraftfahrzeugs nach einem der vorangehenden Ansprüche, wobei die zweite kastenartige Struktur (4) eine keilförmige kastenartige Struktur ist.

6. Außenteileanordnung eines Kraftfahrzeugs nach einem der vorangehenden Ansprüche, wobei die erste und die zweite kastenartige Struktur (3, 4) jeweils an beiden Enden der Außenhaut (1) in der Querrichtung angeordnet sind.

7. Außenteileanordnung eines Kraftfahrzeugs nach einem der vorangehenden Ansprüche, wobei die zweite kastenartige Struktur (4) gleichzeitig mit der Außenhaut (1) durch Spritzgießen in derselben Spritzgussform gebildet ist.

8. Außenteileanordnung eines Kraftfahrzeugs nach einem der vorangehenden Ansprüche, wobei das innere Paneel (2) durch Adhäsion mit der Außenwand (41) der zweiten kastenartigen Struktur (4) verbunden ist.

9. Außenteileanordnung eines Kraftfahrzeugs nach einem der vorangehenden Ansprüche, wobei sie des Weiteren eine Verbindungsschicht (5) umfasst, die zwischen der zweiten kastenartigen Struktur (4) und dem oberen Element (101) und der ersten kastenartigen Struktur (3) angeordnet ist.

10. Außenteileanordnung eines Kraftfahrzeugs nach einem der vorangehenden Ansprüche, wobei die Außenteileanordnung eine Heckklappe oder ein Spoiler ist.

## Revendications

1. Un ensemble de pièces extérieures d'automobile, comprenant une peau extérieure (1) et un panneau intérieur (2) qui sont assemblés par adhérence, dans lequel la peau extérieure (1) comprend un membre supérieur (101), un membre inférieur (103) et un coin arrondi (102) reliant le membre supérieur (101) au membre inférieur (103), le coin arrondi (102) étant de forme convexe et dépassant vers l'extérieur, formant une cavité creuse (C) à l'intérieur du coin arrondi ( 102), **dans lequel** il comprend en outre une première structure en forme de boîte (3) et
dans lequel la première structure en forme de boîte (3) est formée intégralement avec la peau extérieure (1) en un seul tenant et comprend une plaque supérieure inclinée (31) s'étendant obliquement à travers la cavité creuse (C) dans la direction longitudinale d'une extrémité du membre inférieur (103) vers une portion du coin arrondi (102), de sorte qu'une rainure d'encastrement (105) se forme entre la plaque supérieure inclinée (31) et le membre supérieur (101), **caractérisé en ce qu'**il comprend en outre une seconde structure en forme de boîte (4) et
dans lequel la seconde structure en forme de boîte (4) est configurée pour s'engager avec la rainure d'encastrement (105) de sorte que la seconde structure en forme de boîte (4) puisse être insérée dans la rainure d'encastrement (105) pour combler le volume de la cavité creuse et fermer la cavité creuse (C) avec sa paroi extérieure (41), et que la seconde structure en forme de boîte (4) coopère avec et plaque contre la plaque supérieure inclinée (31) avec sa paroi inférieure (42) et coopère avec et plaque contre le membre supérieur (101) avec sa paroi supérieur (43).

2. L'ensemble de pièces extérieures d'automobile selon la revendication précédente, dans lequel l'angle inclus (D) de la rainure d'encastrement (105) formé par la plaque supérieure inclinée (31) et le membre supérieur (101) de la peau extérieure (1) est supérieur à l'angle inclus (E) de la cavité creuse (C).

3. L'ensemble de pièces extérieures d'automobile selon l'une des revendications précédentes, dans lequel l'angle inclus (F) formé par la paroi extérieure (41) de la seconde structure en forme de boîte (4) et le membre supérieur (101) de la peau extérieure (1) est supérieur à l'angle inclus (D) de la rainure d'encastrement (105) formée par la plaque supérieure inclinée (31) et le membre supérieur (101) de la peau extérieure (1).

4. L'ensemble de pièces extérieures d'automobile selon l'une des revendications précédentes, dans lequel l'angle inclus (D) de la rainure d'encastrement (105) formé par la plaque supérieure inclinée (31) et le membre supérieur (101) de la peau extérieure (1) et/ou l'angle inclus (F) formé par la paroi extérieure (41) de la seconde structure en forme de boîte (4) et le membre supérieur (101) de la peau extérieure (1) sont/est supérieur à 40 degrés.

5. L'ensemble de pièces extérieures d'automobile selon l'une des revendications précédentes, dans lequel la deuxième structure en forme de boîte (4) est une structure en forme de boîte en forme de coin.

6. L'ensemble de pièces extérieures d'automobile selon l'une des revendications précédentes, dans lequel les première et deuxième structures en forme de boîte (3, 4) sont respectivement disposées aux deux extrémités de la peau extérieure (1) dans la direction transversale.

7. L'ensemble de pièces extérieures d'automobile selon l'une des revendications précédentes, dans lequel la seconde structure en forme de boîte (4) est formée avec la peau extérieure (1) par moulage d'injection simultanément dans le même outil d'injection.

8. L'ensemble de pièces extérieures d'automobile selon l'une des revendications précédentes, dans lequel le panneau intérieur (2) est fixé à la paroi extérieure (41) de la seconde structure en forme de boîte (4) par adhérence.

9. L'ensemble de pièces extérieures d'automobile selon l'une des revendications précédentes, dans lequel il comprend en outre une couche de liaison (5) disposée entre la deuxième structure en forme de boîte (4) et l'élément supérieur (101) et la première structure en forme de boîte (3).

10. L'ensemble de pièces extérieures d'automobile selon l'une des revendications précédentes, dans lequel l'ensemble de pièces extérieures est un hayon ou un becquet.
